# FASCICULE DE BREVET EUROPEEN

(11) **EP 2 480 839 B1**
(45) Date de publication et mention de la délivrance du brevet: **21.08.2019**
(21) Numéro de dépôt: 10755196.2
(22) Date de dépôt: 23.09.2010
(51) Int. Cl.: F24T 10/00, F24T 10/30, F28D 20/00

(54) **DISPOSITIF D'ECHANGEUR GEOTHERMIQUE COMPRENANT UNE ENCEINTE DESTINEE A ETRE ENFOUIE DANS UN SOUS-SOL TERRESTRE ET A CONTENIR UN ECHANGEUR GEOTHERMIQUE**
GEOTHERMISCHE WÄRMETAUSCHERVORRICHTUNG MIT GEHÄUSE ZUR UNTERIRDISCHEN NUTZUNG FÜR EINEN GEOTHERMISCHEN WÄRMETAUSCHER
GEOTHERMAL HEAT EXCHANGE DEVICE INCLUDING AN ENCLOSURE TO BE BURIED IN THE SUBSURFACE OF THE EARTH AND FOR CONTAINING A GEOTHERMAL HEAT EXCHANGER

(30) Priorité: 24.09.2009 FR 0956586
(43) Date de publication de la demande: 01.08.2012
(73) Titulaire: Commissariat à l'Énergie Atomique et aux Énergies Alternatives, 75015 Paris (FR)
(72) Inventeur: CLAUDON, Fabrice, 73000 Chambery (FR)
(74) Mandataire: Novaimo
(86) Numéro de dépôt international: PCT/EP2010/064079
(87) Numéro de publication internationale: WO 2011/036224

(56) Documents cités:
- AT-B- 345 941
- AT-B- 347 540
- DE-A1-102005 037 997
- FR-A1- 2 566 883
- FR-A1- 2 899 671

## Description

La présente invention concerne un dispositif d'échangeur géothermique comprenant une enceinte avec un échangeur géothermique. Elle concerne encore une machine thermodynamique comprenant un tel dispositif d'échangeur géothermique.

La géothermie fait partie des énergies dites « renouvelables ». Son principe consiste à échanger de l'énergie thermique avec le sous-sol terrestre pour l'utiliser dans des systèmes de production de chauffage ou de production de froid ou de production d'électricité.

On distingue quatre types de géothermie :
- la géothermie haute énergie ;
- la géothermie moyenne énergie ;
- la géothermie basse énergie ; et
- la géothermie très basse énergie.

Les sites géothermiques haute et moyenne énergies permettent la production d'électricité. En revanche, les sites géothermiques basse et très basse énergies ne permettent que la production de chaleur. La géothermie basse énergie utilise des échangeurs placés profondément dans le sous-sol terrestre. La géothermie très basse énergie utilise des machines thermodynamiques, notamment des pompes à chaleur.

La géothermie haute énergie utilise des eaux et des vapeurs ayant des températures de plus de 180 °C, les vapeurs entraînant des turbines entraînant à leur tour des générateurs d'électricité. En moyenne, la température du sous-sol terrestre augmente à partir de la surface terrestre de 3 °C environ par 100 mètres de profondeur, ce qui correspond à un gradient géothermique normal. En de nombreux endroits du globe, nous constatons toutefois des anomalies géothermiques (dites «positives»), c'est-à-dire des régions présentant des gradients de température nettement plus élevés, par exemple en Islande, en Italie, en Indonésie ou en Nouvelle-Zélande. Dans ces endroits, la géothermie haute énergie peut être mise en oeuvre sans réaliser des forages très profonds.

La géothermie moyenne énergie utilise des fluides ayant des températures comprises entre 100 et 180 °C, qui cèdent leur chaleur à un fluide secondaire plus volatil. Ce fluide entraîne alors une turbine qui entraîne un générateur d'électricité.

La géothermie basse énergie utilise des fluides à des températures comprises entre 30 °C et 100 °C. Le rendement est très trop faible pour pouvoir produire de l'électricité, mais elle permet de couvrir une large gamme d'usages : chauffage urbain, chauffage de serres, utilisation de chaleur dans des procédés industriels, thermalisme...

La géothermie très basse énergie est exploitée pour le chauffage et le rafraîchissement des maisons ou des bâtiments collectifs, et aussi pour la production d'eau chaude sanitaire. Pour ce faire, il est nécessaire de prélever ou d'injecter dans le sous-sol terrestre de la chaleur grâce à un échangeur ou capteur géothermique. Cette chaleur entre en jeu dans les échanges énergétiques d'une machine thermodynamique comme une pompe à chaleur. Ce type de géothermie est accessible partout, ou presque, quel que soit le site géographique. Dans ces applications, on enfouit donc dans le sous-sol terrestre un ou plusieurs échangeurs géothermiques.

Dans les applications de géothermie très basse énergie, les différences de température entre l'échangeur géothermique et le sous-sol étant relativement basses, le flux de transfert thermique est donc relativement faible entre l'échangeur géothermique et le sous-sol. En effet, on utilise le plus souvent la chaleur sensible du sol, ce qui limite grandement la puissance échangée. En outre, les échangeurs géothermiques sont de petite taille. Tout ceci contraint à installer un grand nombre d'échangeurs géothermiques dans le sous-sol, ce qui est coûteux.

De plus, dans certaines phases de fonctionnement des installations comprenant les échangeurs géothermiques, il est possible de causer un gel partiel ou total du sous-sol au voisinage des échangeurs, et notamment aux interfaces échangeurs - sous-sol. Ce gel provoque des dilatations du sous-sol. Lors du dégel, le sous-sol se rétracte en laissant un espace entre lui-même et les échangeurs géothermiques. Cet espace nuit évidemment également à la qualité du flux de transfert thermique entre le sous-sol et les échangeurs.

Dans un autre domaine, celui du stockage d'énergie thermique dans des réservoirs enfouis sous terre, on connaît, notamment des documents FR 2 566 883 et AT 345 941, des enceintes calorifugées destinées à recevoir un matériau de stockage d'énergie thermique et à éviter les transferts thermiques avec le sous-sol.

Le but de l'invention est de fournir un dispositif permettant de remédier aux problèmes évoqués précédemment et améliorant les dispositifs connus de l'art antérieur. En particulier, l'invention propose un dispositif permettant d'améliorer le transfert thermique entre un échangeur géothermique et le sous-sol terrestre, notamment dans une application de géothermie très basse énergie. Notamment, l'invention propose un dispositif permettant d'éviter l'apparition d'un espace ou d'un vide d'air entre l'échangeur géothermique et le sous-sol suite à une série successive de gel et de dégel du sous-sol. L'enceinte selon l'invention comprend un premier matériau déformable formant une poche et est destinée à être enfouie dans un sous-sol terrestre et à contenir au moins partiellement un échangeur géothermique. L'enceinte comprend un moyen d'expansion permettant des variations de volume du contenu de l'enceinte.

Le moyen d'expansion peut comprendre un vase d'expansion raccordé hydrauliquement à la poche par une conduite.

Le moyen d'expansion peut comprendre une paroi de la poche pouvant se déformer dans une cavité ou être disposé dans la poche.

Le premier matériau déformable peut être une matière plastique souple, comme du polyéthylène.

L'enceinte peut comprendre au moins une ouverture de passage de conduites hydrauliques connectées à l'échangeur géothermique.

Le dispositif d'échangeur géothermique selon l'invention est caractérisé en ce qu'il comprend une enceinte, définie précédemment, contenant au moins partiellement un échangeur géothermique et contenant un deuxième matériau déformable de remplissage de l'enceinte.

L'échangeur géothermique peut être de type corbeille.

Le deuxième matériau déformable de remplissage peut être un mélange d'eau glycolée et de minéraux comme du sable et/ou du gravier et/ou de la terre.

Les dimensions de la poche peuvent être supérieures de 5 cm à 1 m à celles de l'échangeur géothermique.

Selon l'invention, une machine thermodynamique comprend un condenseur, un évaporateur et un dispositif d'échangeur géothermique défini précédemment et couplé thermiquement avec le condenseur et/ou avec l'évaporateur.

Les dessins annexés représentent, à titre d'exemples, deux modes de réalisation d'un dispositif d'échangeur géothermique selon l'invention.
La figure 1 est un schéma d'un premier mode de réalisation d'un dispositif d'échangeur géothermique selon l'invention.
La figure 2 est un schéma d'un deuxième mode de réalisation d'un dispositif d'échangeur géothermique selon l'invention.

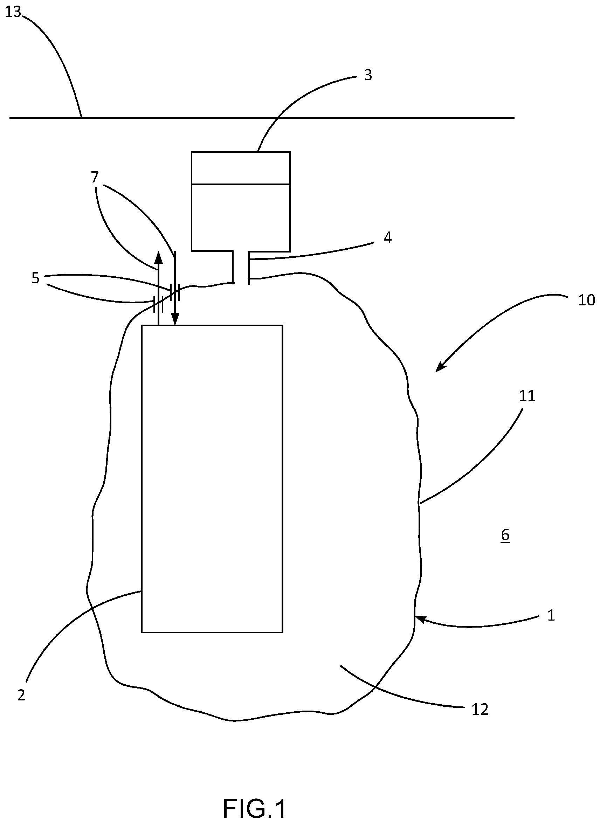

Le dispositif d'échangeur géothermique 10 représenté à la figure 1 comprend principalement un échangeur géothermique 2, une enceinte 1 entourant l'échangeur géothermique et un matériau 12 déformable de remplissage de l'enceinte. Le dispositif d'échangeur géothermique est destiné à être enfoui sous le sol 13, dans le sous-sol terrestre 6.

L'enceinte comprend une poche 11 réalisée en un matériau déformable, par exemple un matériau plastique, en particulier un matériau synthétique souple comme par exemple du polyéthylène haute densité de 0.5 mm d'épaisseur. Le matériau plastique peut être un élastomère comme du caoutchouc, du latex, du butyle, du silicone (en particulier fluoré) ou de l'EPDM (éthylène-propylène-diène monomère). Le matériau plastique peut être du PE (polyéthylène), du PP (polypropylène), du PVC (polychlorure de vinyle) ou un bioplastique. Le matériau plastique peut être un copolymère.

Le matériau déformable utilisé pour réaliser la poche peut présenter une résistance thermique inférieure à 0.1 m².K.W⁻¹, de préférence inférieure à 0.003 m².K.W⁻¹.

La poche comprend au moins une ouverture 5 définissant un passage pour des conduites 7 permettant la circulation d'un fluide caloporteur dans l'échangeur géothermique 2. De préférence, une fois que les conduites traversant la poche au niveau de cette au moins une ouverture sont en place, la poche est étanche à ce niveau. Pour ce faire des moyens d'étanchéité sont prévus au niveau de l'au moins une ouverture 5 et/ou au niveau des conduites 7. Ainsi, l'enceinte est de préférence étanche. Les moyens d'étanchéité peuvent comprendre une soudure au niveau de la poche si le matériau de la poche le permet, soit un collage au niveau de la poche. Les moyens d'étanchéité peuvent aussi comprendre une soudure au niveau des conduites, soit un collage au niveau des conduites. Le moyens d'étanchéité peuvent comprendre un élément intermédiaire, comme un joint, entre une conduite et la poche, l'élément intermédiaire étant enfilé serré sur la conduite et/ou collé à la conduite et/ou soudé à la conduite et l'élément intermédiaire étant collé à la poche et/ou soudé à la poche.

De préférence, la poche est dimensionnée de sorte que la totalité de l'échangeur géothermique soit contenue dans celle-ci. La taille de la poche est limitée par la taille de la tarière qui est utilisée pour installer le dispositif d'échangeur géothermique dans le sous-sol ou par la taille du trou réalisé par une pelle mécanique. Plus son volume est important, mieux c'est. En effet, un fort volume de matériau ayant des conductivité et capacité thermiques élevées a pour effet d'améliorer les échanges thermiques entre l'échangeur géothermique et le sous-sol. De préférence, l'échangeur géothermique est noyé dans une poche dont le diamètre et la hauteur sont supérieurs d'une cinquantaine de centimètres à l'échangeur géothermique. Néanmoins, les dimensions de la poche peuvent aussi être supérieures à celles de l'échangeur géothermique dans un intervalle variant de quelques centimètres, typiquement 5 cm, à 1 m.

Outre la présence de l'échangeur géothermique à l'intérieur de la poche, celle-ci est remplie du matériau 12 de remplissage ayant des conductivité et capacité thermiques élevées de façon à maximiser le flux thermique transmissible entre le sous-sol et l'échangeur géothermique. Ce matériau de remplissage est par exemple un mélange d'eau ou d'eau glycolée et de minéraux comme du sable et/ou du gravier et/ou de la terre. Le matériau peut aussi être du type à changement de phase ou comprendre des éléments à changement de phase. De préférence, la température de changement de phase (fusion) du matériau ou des éléments à changement de phase est supérieure à 0°C, en particulier comprise entre 2°C et 10°C. La conductivité thermique du matériau est par exemple comprise entre 1.5 et 5 W/m.K et la capacité thermique est par exemple comprise entre 1.5 et 4 MJ/m³.K. De préférence, la poche est totalement remplie par l'échangeur géothermique et le matériau de remplissage.

L'enceinte comprend également un moyen d'expansion 3 permettant des variations de volume du contenu de l'enceinte, c'est-à-dire des déformations de la poche. De préférence, le moyen d'expansion comprend un vase d'expansion 3 relié à la poche grâce à une conduite hydraulique 4. Ainsi, sous l'effet de déformation de la poche, une certaine quantité du matériau de remplissage (correspondant à une déformation de la poche) peut être échangée entre la poche et le vase d'expansion. En outre, une certaine quantité du matériau de remplissage peut être échangée entre la poche et le vase d'expansion lorsque ce matériau de remplissage se dilate ou se rétracte sous l'effet de variations de sa température. De l'air, ou un autre gaz, se trouve dans le vase d'expansion, au-dessus du niveau du matériau de remplissage. Ainsi, cet air est compressé ou détendu selon les échanges de matériau de remplissage entre la poche et le vase d'expansion. Bien entendu, les dimensions du vase d'expansion, et notamment son volume, dépendent des dimensions de la poche, et notamment de son volume.

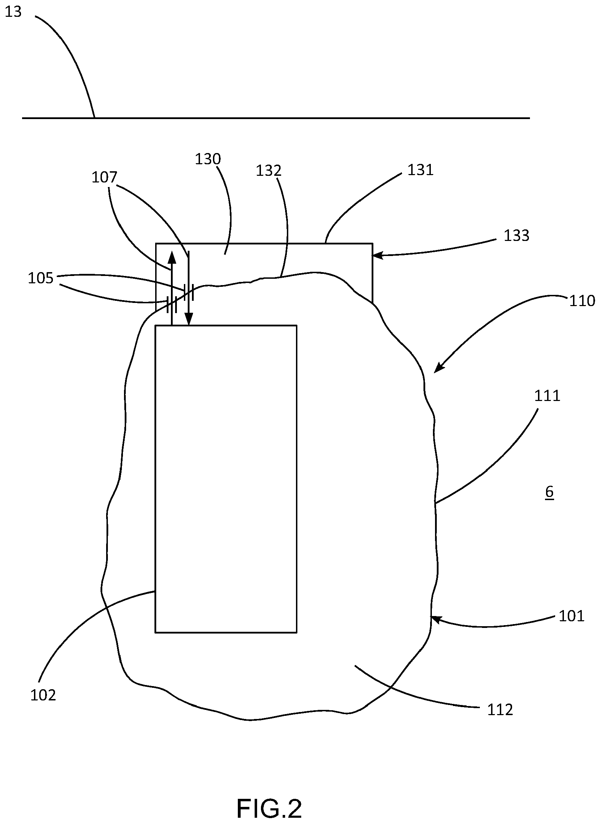

Alternativement, comme décrit ci-après en référence à la figure 2 représentant un deuxième mode de réalisation d'un dispositif d'échangeur géothermique selon l'invention où, par rapport au premier mode de réalisation, les éléments identiques portent des références numériques auxquelles on a ajouté 100, le moyen d'expansion 133 comprend une paroi déformable 132 de la poche 111 pouvant se déformer à l'intérieur d'une cavité 130 extérieure à la poche, par exemple une paroi supérieure 132 de la poche. La cavité 130 peut être réalisée grâce à une forme 131 accolée à la poche 111. En effet, lorsque sous l'effet du gel, le sous-sol se dilate en comprimant la poche au niveau des parois avec lesquelles il est en contact. Les dimensions de la poche sont modifiées et la variation de volume correspondante peut être compensée par la déformation de ladite paroi à l'intérieur de la cavité.

Alternativement encore, dans un troisième mode de réalisation non-représenté, le moyen d'expansion est disposé à l'intérieur de la poche. Dans un premier exemple, le moyen d'expansion peut comprendre une enveloppe déformable et remplie de gaz. L'enveloppe est déformée et son volume est modifié en fonction des modifications des dimensions de la poche. Dans un deuxième exemple, le moyen d'expansion peut comprendre du gaz libre dans la poche, c'est-à-dire que la poche n'est pas complètement remplie avec le matériau de remplissage. Ainsi, dans ce troisième mode de réalisation, la poche contient, outre l'échangeur géothermique et le matériau de remplissage, le moyen d'expansion.

Dans les trois modes de réalisation, la dilatation du sous-sol absorbée par l'enceinte selon l'invention est de l'ordre de un centimètre à quelques centimètres, en cas de changement de phase du sous-sol. Même s'il n'y a pas de changement de phase du sous-sol, l'enceinte selon l'invention permet de garantir un contact permanent avec le sous-sol. Dans tous les cas, le contact garanti avec le sous-sol améliore l'échange thermique entre le sous-sol et l'échangeur géothermique ainsi que le flux thermique entre le sous-sol et l'échangeur géothermique.

L'enceinte selon l'invention permet d'épouser au mieux et tout le temps la forme en creux du sous-sol dans laquelle elle est placée, et ce malgré les dilatations thermiques dues aux variations de température du sol. En effet, l'enceinte permet (par la déformation de la poche qui la constitue) sa déformation lors de la dilatation du sous-sol et elle permet (par l'effet du matériau de remplissage) le rappel de ses parois en contact avec le sous-sol lors du retrait de celui-ci, dû à un dégel par exemple.

Ainsi, l'enceinte selon l'invention constitue un système pouvant être adapté sur des échangeurs géothermiques compacts de façon à garantir dans toutes les conditions un bon contact avec le sous-sol.

Une enceinte selon l'invention et un dispositif d'échangeur géothermique selon l'invention peuvent être utilisés dans une application de géothermie très basse énergie pour le conditionnement (c'est-à-dire le chauffage et/ou le refroidissement) d'un bâtiment de type résidentiel individuel, résidentiel collectif, tertiaire, commercial ou industriel. Dans une telle application, le dispositif d'échangeur géothermique est couplé thermiquement à un évaporateur et/ou un condenseur d'une machine thermodynamique, comme une pompe à chaleur.

L'échangeur géothermique peut être de type corbeille. Ainsi, il peut avoir une dimension longitudinale (sa hauteur) comprise entre 2 m et 5 m et/ou il peut présenter une dimension transversale (notamment un diamètre) comprise entre 0,5 m et 2 m.

Dans un exemple de réalisation particulier, la poche est en matière plastique souple. L'échangeur géothermique est une corbeille géothermique d'un diamètre de 0.4 m et d'une hauteur de 3 mètres située dans la poche. Un vase d'expansion a une capacité de 20 litres et permet de compenser les variations de volume de la poche dues au gel/dégel. La poche présente une hauteur de 3.5 mètres et un diamètre de 0.9 m.

Optionnellement, dans les différents modes de réalisation, il peut être prévu que l'enceinte comprenne un grillage autour de la poche. La fonction d'un tel grillage serait de protéger la poche de certains animaux comme les rongeurs. Le grillage est de préférence métallique. Il peut présenter une maille d'une dimension inférieure à 2 cm, de préférence inférieure à 1 cm. De préférence, un espace est aménagé entre le grillage et la poche. L'espace est tel que le grillage est disposé à quelques centimètres de la poche, de préférence au moins 3 cm, de préférence au moins 5 cm. De préférence encore, un matériau est disposé dans cet espace. Ce matériau est de préférence un conducteur thermique afin de ne pas dégrader le transfert thermique entre le sous-sol et l'échangeur. Ce matériau est par exemple de la terre et/ou du sable et/ou du gravier.

## Revendications

1. Dispositif d'échangeur géothermique (10 ; 110), comprenant une enceinte (1 ; 101) contenant au moins partiellement un échangeur géothermique (2 ; 102), l'enceinte (1 ; 101) comprenant un premier matériau déformable formant une poche (11 ; 111), l'enceinte étant destinée à être enfouie dans un sous-sol terrestre (6), l'enceinte contenant un deuxième matériau (12 ; 112) déformable de remplissage de l'enceinte, le dispositif étant **caractérisé en ce que** l'enceinte comprend un moyen d'expansion (3, 4 ; 133) permettant des variations de volume du contenu de l'enceinte.

2. Dispositif d'échangeur géothermique selon la revendication 1, **caractérisé en ce que** le moyen d'expansion comprend un vase d'expansion (3) raccordé hydrauliquement à la poche par une conduite (4).

3. Dispositif d'échangeur géothermique selon la revendication 1 ou 2, **caractérisé en ce que** le moyen d'expansion comprend une paroi (132) de la poche (111) pouvant se déformer dans une cavité (130) ou **en ce que** le moyen d'expansion est disposé dans la poche.

4. Dispositif d'échangeur géothermique selon l'une des revendications précédentes, **caractérisé en ce que** le premier matériau déformable est une matière plastique souple, comme du polyéthylène.

5. Dispositif d'échangeur géothermique selon l'une des revendications précédentes, **caractérisé en ce qu'**elle comprend au moins une ouverture (5 ; 105) de passage de conduites hydrauliques (7 ; 107) connectées à l'échangeur géothermique (2 ; 102).

6. Dispositif d'échangeur géothermique selon l'une des revendications précédentes, **caractérisé en ce que** l'échangeur géothermique (2 ; 102) est de type corbeille.

7. Dispositif d'échangeur géothermique selon l'une des revendications précédentes, **caractérisé en ce que** le deuxième matériau (12 ; 112) déformable de remplissage est un mélange d'eau glycolée et de minéraux comme du sable et/ou du gravier et/ou de la terre.

8. Dispositif d'échangeur géothermique selon l'une des revendications précédentes, **caractérisé en ce que** les dimensions de la poche (11 ; 111) sont supérieures de 5 cm à 1 m à celles de l'échangeur géothermique (2 ; 102).

9. Machine thermodynamique comprenant un condenseur, un évaporateur et un dispositif d'échangeur géothermique (10 ; 110) selon l'une des revendications précédentes couplé thermiquement avec le condenseur et/ou avec l'évaporateur.

## Patentansprüche

1. Geothermische Wärmeaustauschvorrichtung (10; 110), umfassend ein Gehäuse (1; 101), das zumindest teilweise einen geothermischen Wärmetauscher (2,; 102) enthält, wobei ein erstes verformbares Material eine Tasche (11; 111) bildet und dazu bestimmt ist, unterirdisch (6) verwendet zu werden, wobei das Gehäuse ein zweites verformbares Material (12; 112) zum Füllen des Gehäuses umfasst, und **dadurch gekennzeichnet, dass** das Gehäuse ein Expansionsmittel (3, 4; 133) umfasst, das Volumenvariationen des Inhalts des Gehäuses ermöglicht.

2. Geothermische Wärmeaustauschvorrichtung nach Anspruch 1, **dadurch gekennzeichnet, dass** das Expansionsmittel ein Expansionsgefäß (3) umfasst, das hydraulisch an die Tasche durch eine Leitung (4) angeschlossen ist.

3. Geothermische Wärmeaustauschvorrichtung nach Anspruch 1 oder 2, **dadurch gekennzeichnet, dass** das Expansionsmittel eine Wand (132) der Tasche (111) umfasst, die sich in einem Hohlraum (130) verformen kann, oder dass das Expansionsmittel in der Tasche angeordnet ist.

4. Geothermische Wärmeaustauschvorrichtung nach einem der vorhergehenden Ansprüche, **dadurch gekennzeichnet, dass** das erste verformbare Material ein flexibler Kunststoff, wie Polyethylen, ist.

5. Geothermische Wärmeaustauschvorrichtung nach einem der vorhergehenden Ansprüche, **dadurch gekennzeichnet, dass** sie mindestens eine Durchgangsöffnung (5; 105) von Hydraulikleitungen (7; 107) umfasst, die an den geothermischen Wärmetauscher (2; 102) angeschlossen sind.

6. Geothermische Wärmeaustauschvorrichtung nach einem der vorhergehenden Ansprüche, **dadurch gekennzeichnet, dass** der geothermische Wärmetauscher (2; 102) korbartigen Typs ist.

7. Geothermische Wärmetauschvorrichtung nach einem der vorhergehenden Ansprüche, **dadurch gekennzeichnet, dass** das zweite verformbare Füllmaterial (12; 112) ein Gemisch von Sole und Mineralien, wie Sand und/oder Kies und/oder Erde, ist.

8. Geothermische Wärmeaustauschvorrichtung nach einem der vorhergehenden Ansprüche, **dadurch gekennzeichnet, dass** die Dimensionen der Tasche (11; 111) um 5 cm bis 1 m größer als jene des geothermischen Wärmetauschers (2; 102) sind.

9. Thermodynamische Maschine, umfassend einen Kondensator, einen Verdampfer und eine geothermische Wärmeaustauschvorrichtung (10; 110), die thermisch mit dem Kondensator und/oder mit dem Verdampfer gekoppelt ist.

## Claims

1. Geothermal heat exchange device (10; 110), comprising an enclosure (1; 101) at least partially containing a geothermal heat exchanger (2; 102), the enclosure (1; 101) comprising a first deformable material forming a pocket (11; 111), the enclosure being intended to be buried in a subsoil of the earth (6), the enclosure containing a second deformable material (12; 112) filling the enclosure, and the device being **characterized in that** the enclosure comprises an expansion means (3, 4; 133) allowing variations of volume of the contents of the enclosure.

2. Geothermal heat exchange device according to Claim 1, **characterized in that** the expansion means comprises an expansion vessel (3) coupled hydraulically to the pocket by a conduit (4).

3. Geothermal heat exchange device according to Claim 1 or 2, **characterized in that** the expansion means comprises a wall (132) of the pocket (111) that can be deformed in a cavity (130) or **in that** the expansion means is arranged in the pocket.

4. Geothermal heat exchange device according to one of the preceding claims, **characterized in that** the first deformable material is a flexible plastic material, such as polyethylene.

5. Geothermal heat exchange device according to one of the preceding claims, **characterized in that** it comprises at least one aperture (5; 105) for the passage of hydraulic ducts (7; 107) connected to the geothermal heat exchanger (2; 102).

6. Geothermal heat exchange device according to one of the preceding claims, **characterized in that** the geothermal heat exchanger (2; 102) is of basket type.

7. Geothermal heat exchange device according to one of the preceding claims, **characterized in that** the second deformable filling material (12; 112) is a mixture of glycol water and of minerals such as sand and/or gravel and/or earth.

8. Geothermal heat exchange device according to one of the preceding claims, **characterized in that** the dimensions of the pocket (11; 111) are greater by 5 cm to 1 m than those of the geothermal heat exchanger (2; 102).

9. Thermodynamic machine comprising a condenser, an evaporator and a geothermal heat exchange device (10; 110) according to one of the preceding claims coupled thermally with the condenser and/or with the evaporator.
